**Europäisches Patentamt**

**European Patent Office**

**Office européen des brevets**

(19)

(11) Veröffentlichungsnummer : **0 018 527**
**B1**

(12) **EUROPÄISCHE PATENTSCHRIFT**

(45) Veröffentlichungstag der Patentschrift :
26.01.83

(21) Anmeldenummer : **80101972.0**

(22) Anmeldetag : **12.04.80**

(51) Int. Cl.³ : **B 01 D 27/12**

(54) Rückspülbare Filtereinrichtung, insbesondere für eine Hauswasseranlage.

(30) Priorität : **27.04.79 DE 2917090**

(43) Veröffentlichungstag der Anmeldung :
**12.11.80 Patentblatt 80/23**

(45) Bekanntmachung des Hinweises auf die Patenterteilung : **26.01.83 Patentblatt 83/04**

(84) Benannte Vertragsstaaten :
**CH FR GB LI NL SE**

(56) Entgegenhaltungen :
**DE A 2 025 883**
**DE A 2 645 948**
**DE B 1 201 813**
**DE C 224 626**
**GB A 1 110 753**
**GB A 1 401 079**

(73) Patentinhaber : **Honeywell-Braukmann GmbH**
**Hardhofweg**
**D-6950 Mosbach (DE)**

(72) Erfinder : **Braukmann, Bernhard W.**
**Am Rosenberg 1**
**D-6950 Mosbach (DE)**
Erfinder : **Gocke, Eberhard, Ing.-grad.**
**Bahnhofstrasse 16**
**D-6950 Mosbach-Neckarelz (DE)**

(74) Vertreter : **Rentzsch, Heinz et al**
**Honeywell Europe S.A. Holding KG Patent- und Lizenzabteilung Postfach 184**
**D-6050 Offenbach am Main (DE)**

Rückspülbare Filtereinrichtung, insbesondere für eine Hauswasseranlage

Die vorliegende Erfindung bezieht sich auf eine rückspülbare Filtereinrichtung nach dem Oberbegriff des Anspruches 1.

Eine solche rückspülbare Filtereinrichtung ist aus der DE-A 26 45 948 bekannt, und insbesondere dort in Figur 7 dargestellt. Bei dieser Bekannten Filtereinrichtung wird im Normalbetrieb ein Hauptfilter von außen nach innen durchströmt, wobei ein erstes Absperrventil den Durchtritt des Mediums zwischen einem Ein- und einem Auslaß steuert. Andererseits wird das Hauptfilter im Rückspülbetrieb von innen nach außen durchströmt, wobei ein zweites Absperrventil den Durchtritt des Mediums zwischen dem Einlaß und einem Abflußstutzen steuert.

Der Druck der Hauswasserleitung, in die die Filtereinrichtung eingebaut ist, ist in der Regel vorgegeben und somit nicht zu verändern. Die Reinheitsanforderungen an das Wasser legen die Maschenweite des Filters fest. Andererseits hängt die Durchtrittsgeschwindigkeit des Wassers durch das Filter vom Leitungsdruck und der Größe der Sieböffnungen ab. Dies Führt dazu, daß der Reinigungseffekt beim Rückspülen bei etwas stärker verschmutztem Filter größer ist als bei geringerer Verschmutzung, bei welcher die Durchtrittsöffnungen des Filters noch nicht zu sehr verkleinert wurden. Das hängt damit zusammen, daß die Durchtrittsgeschwindigkeit mit Verringerung des Querschnitts der einzelnen Sieböffnungen zunimmt und bei erhöhter Strömmungsgeschwindigkeit die anhaftenden Patikel leichter weggerissen werden können als bei vergleichsweise geringerer Strömmungsgeschwindigkeit.

Auch bei einem stark verschmutzten Sieb kann sich eine ungünstige Reinigungswirkung dadurch ergeben, daß zunächst einmal an verschiedenen Stellen größere Teilstücke der Schmutzschicht herausgebrochen werden und nachfolgendes Spülwasser nur noch durch diese freigelegten Teile des Filters strömt, während die übrigen noch · stark verschmutzten Filterteile kaum mehr durchflossen werden.

Um hier Abhilfe zu schaffen, ist es beispielsweise aus der DE-A 20 25 883 bekannt, mittels einer gegen das Innere des Filters gerichteten Spritz- oder Sprühvorrichtung das Filter abschnittsweise zu reinigen. Dort wird jedoch das Medium im Rückspülbetrieb über eine gesonderte Leitung der Sprüh- oder Spritzvorrichtung zugeführt. Will man durch bloße Umschaltung der Strömmungsrichtung über Absperrventile den Rückspülbetrieb einleiten, wie dies bei der Filtereinrichtung gemäß der DE-A 26 45 948 geschieht und würde man dort die anderweitig bekannte Sprüh- oder Spritzvorrichtung einsetzen, so ergeben sich Schwierigkeiten dergestalt, daß normalerweise nicht die gesamte durch den Einlaß fließende Strömmungsmenge über die Sprüh- oder Spritzvorrichtung fließt, wodurch der Reinigungseffekt nicht optimal wird.

Es ist daher die Aufgabe der vorliegenden Erfindung, die rückspülbare Filtereinrichtung der eingangs genannten Art so auszubilden, daß auch bei einer abschnittsweisen Reinigung des Filters die gesamte über den Einlaß der Filtereinrichtung eingetretene und durch das geöffnete zweite Absperrventil fließende Strömung ins Innere einer Sprüh- oder Spritzvorrichtung gelangen kann, so daß das Medium ohne Strömungsverlust für den Reinigungsvorgang zur Verfügung steht. Die Lösung dieser Aufgabe gelingt gemäß der im Anspruch 1 gekennzeichneten Erfindung. Weitere vorteilhafte Ausgestaltungen der Erfindung sind den Unteransprüchen entnehmbar.

In der Zeichnung sind zwei Ausführungsbeispiele der Erfindung dargestellt. Es zeigen :

Figur 1 einen vertikalen Längsmittelschnitt durch eine erste Ausführungsform, wobei die linke Bildhälfte die Filtereinrichtung im Normalbetrieb und die rechte Bildhälfte die Stellung der verschiebbaren Teile beim Rückspielbetrieb zeigt,

Figur 2 in analoger Darstellungsweise zur Fig. 1 einen vertikalen Längsmittelschnitt durch eine zweite Variante der Erfindung, wobei die linke Bildhälfte die Teile beim Rückspülen zeigt,

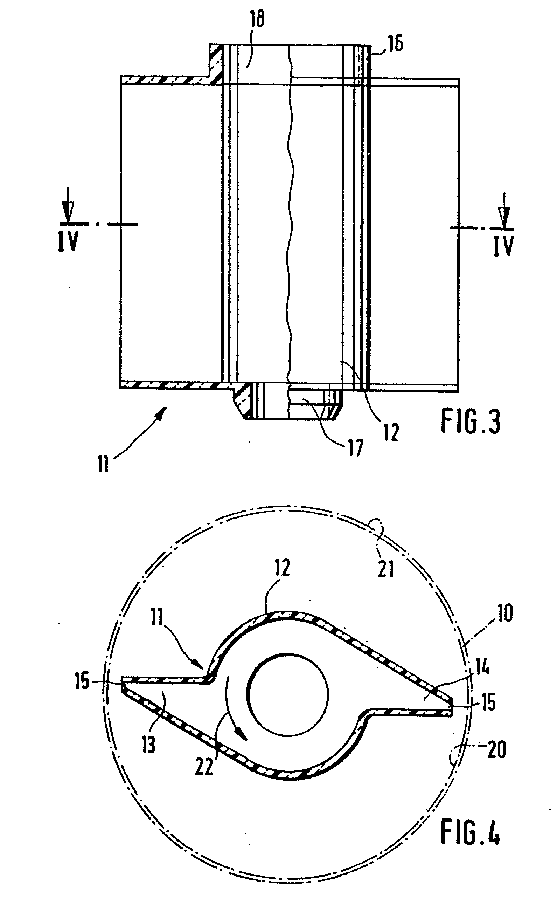

Figur 3 einen Halbschnitt durch die Sprüh- oder Spritzvorrichtung,

Figur 4 einen Schnitt gemäß der Linie IV-IV der Fig. 3 und schematisch einen Schnitt durch das Hauptfilter.

Die rückspülbare Filtereinrichtung besitzt einen Einlaß 1, über welchen das ungefilterte Medium, insbesondere Wasser, in Pfeilrichtung 2 eintritt, und einen Auslab (Auslaßstutzen 3), von welchem aus das gefilterte Wasser zu dem oder den nicht gezeigten Verbrauchern strömt. Das Gehäuse 4 dieser Filtereinrichtung besteht im wesentlichen aus dem oberen Gehäuseteil 5, das mit einem Manometeranschluß zur Überprüfung des Drucks und/oder einem Entlüftungsstutzen versehen sein kann, sowie dem unteren Gehäuseteil 8 mit der verschließbaren Ablaßöffnung 9 für das beim Rückspülen gebildete, abzuleitende Schmutzwasser. Durch das obere Gehäuseteil 5 werden ein Vordruckraum 6 sowie ein Hinterdruckraum 7 gebildet. Das untere Gehäuseteil 8 besteht vorzugsweise aus Kunststoff, beispielsweise durchsichtigem Kunststoff, um das Innere der Filtereinrichtung, insbesondere den Grad der Verschmutzung des Hauptfilters 10, von außen sehen zu können. Das obere Gehäuseteil 5 ist hingegen aus Metall, insbesondere nichtrostendem Metall hergestellt. Die beiden Schraubanschlüsse des Ein- und Auslasses verlaufen koaxial zueinander, um die Filtereinrichtung in einen geraden Rohrstrang einsetzen zu können. Außerdem ermöglichen sie das leichte Auswechseln der Filtereinrichtung, falls das später irgendwann einmal notwendig werden sollte.

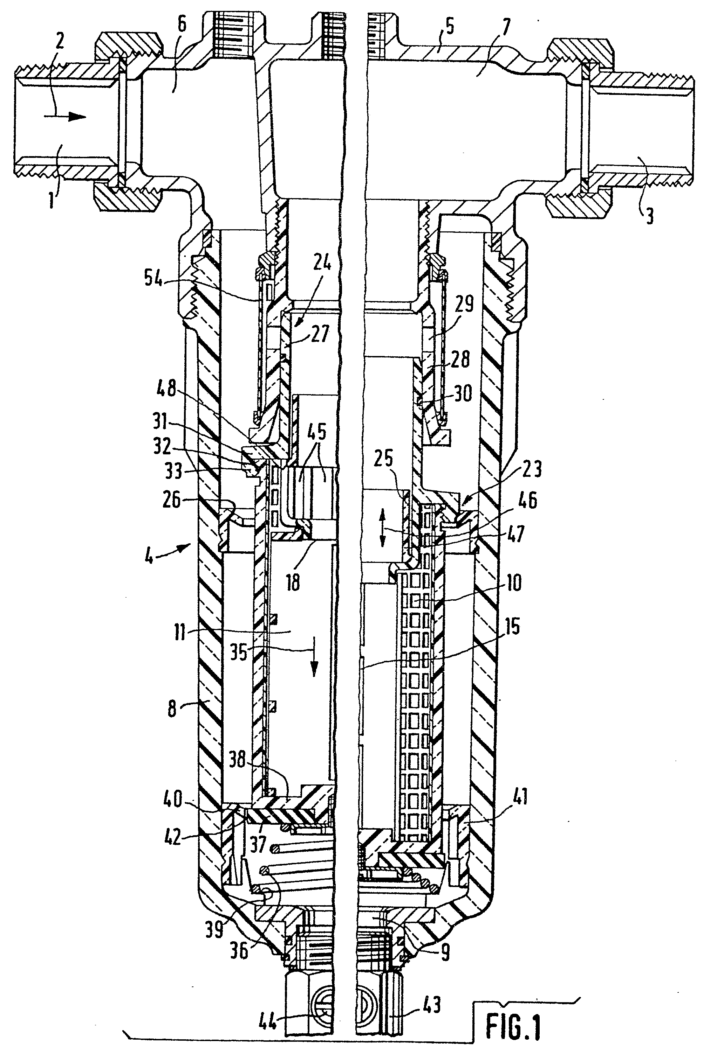

Das Hauptfilter 10 besitzt eine kreiszylindrische Form und in seinem Innern befindet sich gemäß der erfindungsgemäßen Ausgestaltung eine Sprüh- oder Spritzvorrichtung 11. Sie besteht beim Ausführungsbeispiel im wesentlichen aus einem zylindrischen, vorzugsweise kreiszylindrischen Grundkörper 12 und zwei daran angesetzten, insbesondere angeformten, um 180° am Umfang versetzt angebrachten Flachdüsen 13 und 14. Ihr Austrittsschlitz 15 kann durchgehend oder gemäß der rechten Bildhälfte der Fig. 1, unterbrochen sein. Die Düsenmitte ist gegenüber einer Radialebene durch den Grundkörper 12 seitlich versetzt, um das notwendige Drehmoment beim Ausströmen des Wassers aus der Sprüh- oder Spritzvorrichtung 11 zu erzeugen. Infolgedessen bedarf also diese Sprüh- oder Spritzvorrichtung 11 keines besonderen Antriebs, vielmehr wird sie lediglich hydraulisch in Drehung versetzt, und aus diesem Grunde besitzt sie noch einen oberen und unteren Lagerzapfen 16 bzw. 17.

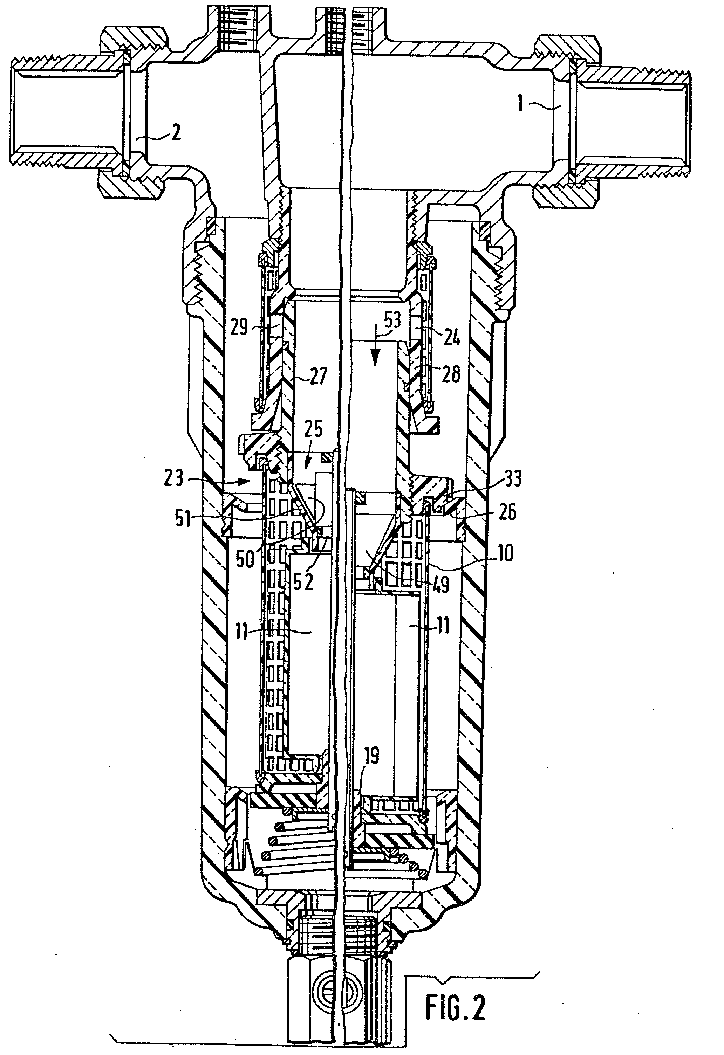

Zumindest der obere Lagerzapfen 16 ist rohrförmig und er bildet zugleich einen Einlaß 18 für das über die Düsen 13, 14 austretende Wasser. Sofern der untere Lagerzapfen 17 ebenfalls rohrförmig ist, muß seine Bohrung im eingebauten Zustand durch geeignete Mittel, beispielsweise einen Lagerdorn 19 (Fig. 2), verschlossen werden. Wie Fig. 4 zeigt, sind die Austrittsschlitze 15 der Düsen 13, 14 gegen die Innenwandung 20 des die Sprüh- oder Spritzvorrichtung 11 konzentrisch umgebenden Hauptfilters 10 gerichtet. Die kräftigen, aus den Austrittsschlitzen beim Rückspülen der Filtereinrichtung austretenden Wasserstrahlen, durchströmen die Öffnungen des Hauptfilters 10 von innen nach außen und lösen dabei den sich im Normalbetrieb an der Außenwandung 21 des Hauptfilters 10 absetzenden Schmutz. Im Laufe einer beispielsweise im Sinne des Pfeils 22 erfolgenden Umdrehung der Sprüh- oder Spritzvorrichtung 11 wird bei zwei Düsen jede Stelle des Hauptfilters 10 von einem relativ scharfen Wasserstrahl zweimal überstrichen. Die Filtereinrichtung besitzt ein erstes Absperrventil 23, ein zweites Absperrventil 24 und ein drittes Absperrventil 25. In Normalbetrieb (linke Bildhälfte der Fig. 1) ist das erste Absperrventil 23 offen und das zweite Absperrventil 24 geschlossen. Infolgedessen strömt das Wasser vom Einlaß 2 über den Vordruckraum 6, den Ventilsitz 26 des ersten Absperrventils 23 zum Hauptfilter 10. Letzteres wird von außen nach innen durchflossen, und anschließend verläßt das gefilterte Wasser die rückspülbare Filtereinrichtung über den Hinterdruckraum 7 und den Auslaßstutzen 3.

Das zweite Absperrventil 24 ist als · Schieber ausgebildet und es besteht aus einem rohrförmigen Ansatz 27 des Hauptfilters 10 sowie einem rohrförmigen inneren Gehäuseansatz 28 mit insbesondere gleichmäßig am Umfang angebrachten Durchbrüchen 29. Die Ansätze 27 und 28 sind mit Hilfe eines O-rings 30 gegeneinander abgedichtet, der in eine Außennut des rohrförmigen Ansatzes 27 eingesetzt ist. In der oberen Endlage des letzteren sind die Durchbrüche 29 verschlossen, d.h. das zweite Absperrventil ist dabei geschlossen, während es geöffnet ist, wenn sich der rohrförmige Ansatz 27 gemäß der rechten Bildhälfte der Fig. 1 in der unteren Endlage befindet.

In Fig. 1 besitzt der rohrförmige Ansatz 27 einen angeformten Außenbund 31 in Form eines im Querschnitt winkelförmigen Befestigungsflansches, mit dessen Hilfe er über ein Gewinde 32 am Hauptfilter 10 gehalten ist und der zugleich auch noch den Ventilteller bzw. das Verschlußorgan 33 des ersten Absperrventils 23 bildet. Demgegenüber ist beim Ausführungsbeispiel der Fig. 2 auf ein Außengewinde des rohrförmigen Ansatzes 27 ein Außenbund in Form eines Ringes aufgeschraubt, der einerseits die obere Haltevorrichtung für den Filterkörper des Hauptfilters 10 und andererseits wiederum den Ventilteller 33 des ersten Absperrventils 23 bildet.

Aus dem Vorstehenden folgt, daß jeweils nur eines der beiden Absperrventile 23 und 24 geöffnet sein kann. Im Normalbetrieb ist, wie gesagt, das erste Absperrventil 23 geöffnet, während das zweite Absperrventil 24 geschlossen ist. Im Rückspülbetrieb ist es gerade umgekehrt. Das Rückspülen erreicht man, indem man durch geeignete, nicht näher gezeigte Mittel, die aus dem rohrförmigen Ansatz 27, dem Hauptfilter 10 und der Sprüh- oder Spritzvorrichtung 11 bestehende Einheit im Sinne des Pfeils 35 von der in der linken Bildhälfte der Fig. 1 zu sehenden oberen Endstellung gegen den Widerstand einer Rückstellfeder 36 in die sich aus der rechten Bildhälfte der Fig. 1 ergebende untere Verschiebeendstellung überführt. Die Rückstellfeder 36 stützt sich indirekt über eine Scheibe 37 am Boden 38 des Hauptfilters 10 einerseits und an einem Gehäuseabsatz 39 andererseits ab. Der Außenrand der Scheibe 37 wirkt mit dem zugeordneten Rand 40 eines rohrförmigen Einsatzstücks 41 des unteren Gehäuseteils 8 zusammen, wobei im Normalbetrieb zwischen beiden lediglich ein Drosselspalt 42 verbleibt. An dieser Stelle sei auch noch erwähnt, daß die Ablaßöffnung 9 in bekannter Weise mittels einer als Hahn ausgebildeten Absperrvorrichtung 43 verschließ- bzw. freigebbar ist. Die Stellung des Hahnkükens 44 kann aufgrund eines entsprechenden Symbols von außen erkannt werden.

Wie bereits ausgeführt, strömt im Normalbetrieb das Wasser in radialer Richtung durch das Hauptfilter 10. Dabei trifft es dann an der Außenwandung der Sprüh- oder Spritzvorrichtung 11 auf. Entlang dieser Außenwandung fließt es entgegen dem Pfeil 35 nach oben. Ins Innere des rohrförmigen Ansatzes 27 gelangt es über Durchbrüche 45 des rohrförmigen Ansatzes 27, die insbesondere gleichmäßig am Umfang verteilt sind und die Gestalt von Längsschlitzen haben. Diese Durchbrüche 45 sind mittels einer in Richtung des Doppelpfeils 46 verschiebbaren Hülse 47 absperr- oder freigebbar. Die Hülse 47 bildet zusammen mit dem die Durchbrüche 45 aufweisenden Teil des rohrförmigen Ansatzes 27 das dritte Absperrventil 25.

Im Normalbetrieb ist das dritte Absperrventil geöffnet, weil sich die Hülse 47 dabei in ihrer angehobenen, die Durchbrüche 45 freigebenden Lage befindet. Sie behält diese allein aufgrund der Strömung bei. Das Anheben wird mit Hilfe eines Hubrandes 48 am unteren Ende der Hülse 47 bewirkt, der zugleich einen Anschlag für die obere Verschiebeendlage bildet.

Beim Rückspülen gewährleistet das dritte Absperrventil 25 bzw. dessen als Hülse 47 ausgebildetes Verschlußorgan, daß das über die Durchbrüche 29 des zweiten Absperrventils 24 in den rohrförmigen Ansatz 27 eingetretene Wasser nicht über die Durchbrüche 45 entweicht, sondern über den Einlaß 18 ins Innere der Sprüh- oder Spritzvorrichtung 11 eintritt.

Beim Ausführungsbeispiel der Fig. 2 ist das dritte Absperrventil 25 etwas anders ausgebildet, jedoch weicht es funktionsmäßig von demjenigen gemäß Fig. 1 nicht ab. Das Verschlußorgan des dritten Absperrventils 25 besteht dort aus einer elastischen, insbesondere aus Gummi od. dgl. gefertigten, trichterförmigen Hülse 49, die Durchbrüche 50 an einer ebenfalls trichterförmigen Ventilhülse 51 freigibt oder abdeckt. Letztere ist durch das dem Hauptfilter 10 zugekehrte eine Ende des rohrförmigen Ansatzes 27 der Sprüh- oder Spritzvorrichtung 11 gebildet, wobei dieser Ansatz 27 in diesem Falle vorzugsweise zweiteilig ausgebildet ist. Die elastische Hülse 49 besitzt eine ihrem kleineren Durchmesser zugeordneten Haltering 52, der ins untere Trichterende der Ventilhülse 51 eingesteckt und in geeigneter Weise gehalten ist. Wenn die Strömung beim Rückspülen von oben kommt (Pfeilrichtung 53), weitet sich die elastiche Hülse 49 auf und schmiegt sich dadurch an die Innenwandung der Ventilhülse 51, so daß deren Durchbrüche 50 abgedeckt werden. Im Normalbetrieb werden die Durchbrüche 50 von außen nach innen durchflossen, und die Strömung drückt dabei die elastische Hülse zur Seite, womit die Durchbrüche 50 freigegeben werden.

Um beim Rückspülen ein Eindringen von Schmutz ins Innere der Filtereinrichtung und insbesondere in den Bereich des zweiten und dritten Absperrventils zu verhindern, ist der rohrförmige Gehäuseansatz 28 konzentrisch von einem Vorfilter 54 umgeben.

## Ansprüche

1. Rückspülbare Filtereinrichtung, insbesondere für eine Hauswasseranlage, mit einem im Normalbetrieb von außen nach innen und im Rückspülbetrieb von innen nach außen durchströmten Hauptfilter (10), mit einem ersten zwischen einem Einlaß (1) und dem Hauptfilter (10) angeordneten Absperrventil (23) und mit einem zweiten zwischen dem Einlaß (1) und einem Auslaßstutzen (3) angeordneten Absperrventil (24), gekennzeichnet durch folgende Merkmale :

a) in dem Hauptfilter (10) ist eine drehbar gelagerte, beim Rückspülen angetriebene Sprüh- oder Spritzvorrichtung (11) angeordnet, welche aus einem einseitig offenen zylindrischen Grundkörper (12) besteht, dessen Höhe etwa des Hauptfilters (10) entspricht und der wenigstens eine gegen die Innenfläche (20) des Hauptfilters (10) gerichtete Flachdüse (13, 15) aufweist ; und

b) im Rückspülbetrieb ist im Strömungsweg zwischen dem zweiten Absperrventil (24) und einer Einlaßöffnung (18) der Sprüh- oder Spritzvorrichtung (11) ein drittes Absperrventil (25) angeordnet, welches ein Verschlußorgan in einem rohrförmigen Ansatz (27) des Hauptfilters (10) umfaßt, wobei das Verschlußorgan mit am Umfang des rohrförmigen Ansatzes (27) verteilten Durchbrüchen (45 ; 50) zusammenwirkt und im Rückspülbetrieb die unmittelbare hydraulische Verbindung zwischen dem im wesentlichen durch die Sprüh- oder Spritzvorrichtung (11) und das Hauptfilter (10) definierten Innenraum einerseits und dem zwischen dem zweiten Absperrventil (24) und der Einlaßöffnung (18) der Sprüh- oder Spritzvorrichtung (11) gelegenen Strömungsraum andererseits absperrt.

2. Filtereinrichtung nach Anspruch 1, dadurch gekennzeichnet, daß das Verschlußorgan des dritten Absperrventils (25) aus einer in dem rohrförmigen Ansatz (27) des Hauptfilters (10) verschiebbaren Hülse (47) besteht.

3. Filtereinrichtung nach Anspruch 2, dadurch gekennzeichnet, daß die Hülse (47) einen nach außen ragenden Hubrand (48) besitzt.

4. Filtereinrichtung nach Anspruch 3, dadurch gekennzeichnet, daß der Hubrand (48) als Anschlagglied für die geöffnete Stellung des dritten Absperrventils (25) ausgebildet ist.

5. Filtereinrichtung nach Anspruch 1, dadurch gekennzeichnet, daß das Verschlußorgan des dritten Absperrventils (25) aus einer elastischen, trichterförmigen Hülse (49) mit einem kleineren Durchmesser zugeordneten Halterring (52) besteht, die sich im Innern einer ebenfalls trichterförmigen, wenigstens einen Durchbruch (50) aufweisenden Ventilhülse (51) befindet, wobei die Ventilhülse (51) das eine Ende des rohrförmigen Ansatzes (27) mit der Einlaßöffnung (18) der Sprüh- oder Spritzvorrichtung (11) verbindet.

6. Filtereinrichtung nach einem oder mehreren der Ansprüche 2 bis 5, dadurch gekennzeichnet, daß der rohrförmige Ansatz (27) des Hauptfilters (10) zugleich das Verschlußorgan des zweiten Absperrventils zugleich das Verschlußorgan des zweiten Absperrventils (24) bildet und in einem mit mindestens einem Durchbruch (29) versehene, rohrförmigen inneren Gehäuseansatz (28) mit dem Auslaßstutzen (3) hydraulisch verbunden ist.

7. Filtereinrichtung nach Anspruch 6, dadurch gekennzeichnet, daß der rohrförmige Gehäuseansatz (28) konzentrisch von einem Vorfilter (54) umgeben ist.

8. Filtereinrichtung nach einem oder mehreren der Ansprüche 2 bis 7, dadurch gekennzeichnet, daß ein Außenbund (31) des rohrförmigen Ansatzes (27) das Verschlußorgan (33) des ersten Absperrventils (23) bildet, das mit einem gehäusefesten Ventilsitzring (26) zusammenwirkt.

## Claims

1. Return-flow filtration device with return-flow purging capability, especially for a domestic water system, comprising a main filter (10) through which during normal operation the medium flows from the exterior to the interior and during return-flow purging operation flows from the interior to the exterior, a first shutoff valve (23) located between an inlet (1) and the main filter (10) and a second shutoff valve (24) located between the inlet (1) and an outlet stud (3), characterized by the following features :

a) a sprinkling or spraying device (11) is pivotally mounted in the main filter (10) and is activated during return-flow purging operation, said device consisting of a cylindrical base body (12) open at one side and having a height corresponding approximately to the height of the main filter (10) and with said body comprising at least one flat nozzle (3, 14) directed against the interior surface (20) of said main filter (10) ; and

b) a third shutoff valve (25) is arranged in the flow path during return-flow purging operation between the second shutoff valve (24) and an inlet opening (18) of the sprinkling or spraying device (11), said third valve comprising a closure member provided in a tube-shaped extension (27) of the main filter (10), whereat the closure member cooperates with recesses (45 ; 50) distributed over the periphery of the tube-shaped extension (27) and during return-flow purging operation shuts off the direct fluid connection between the interior space at one hand, which is essentially defined by the sprinkling or spraying device (11) and the main filter (10), and the fluid space at the other hand, which is arranged between the second shutoff valve (24) and the inlet opening (18) of the sprinkling or spraying device (11).

2. Filtration device according to claim 1, characterized in that the closure member of the third shutoff valve (25) consists of a sleeve (47) being displaceable within the tube-shaped extension (27) of the main filter (10).

3. Filtration device according to claim 2, characterized in that the sleeve (47) comprises an outwardly extending stroke rim (48).

4. Filtration device according to claim 3, characterized in that the stroke rim (48) is designed as a strop member in the opening position of the third valve (25).

5. Filtration device according to claim 1, characterized in that the closure member of the third shutoff valve (25) consists of an elastic funnel-shaped sleeve (49) with a retainer ring (52) related to the smaller diameter of the sleeve, said sleeve being arranged in the interior of a valve sleeve (51) also being funnel-shaped and having at least one recess, whereat the valve sleeve (51) connects one end of the tube-shaped extension (27) to the inlet opening (18) of the sprinkling or spraying device (11).

6. Filtration device according to one or more of the claims 2 to 5, characterized in that the tube-shaped extension (27) of the main filter (10) simultaneously forms the closure member of the second shutoff valve (24) and is sealingly displaceable in an inner housing extension (28) comprising at least one recess (29), whereat said housing extension (28) is hydraulically connected to the outlet stud (3).

7. Filtration device according to claim 6, characterized in that the tube-shaped housing extension (28) is concentrically surrounded by a prefilter (54).

8. Filtration device according to one or more of the claims 2 to 7, characterized in that an outer flange (31) of the tube-shaped extension (27) forms the closure member (33) of the first shutoff valve (23), with said closure member cooperating with a valve seat ring (26) fixed in the housing.

## Revendications

1. Dispositif de filtrage à rétro-rinçage, plus particulièrement pour une installation d'eau domestique, comportant un filtre principal (10) traversé en service normal de l'extérieur vers l'intérieur et un mode de rétro-rinçage de l'intérieur vers l'extérieur, une première soupape d'arrêt (23) disposée entre une entrée (1) et le filtre principal (10) et une seconde soupape d'arrêt (24) disposée entre l'entrée (1) et une tubulure de sortie (3), caractérisé en ce que :

a) dans le filtre principal (10) est installé un dispositif de pulvérisation ou projection (11) monté à rotation, entraîné lors du rétro-rinçage et qui se compose d'un corps (12) cylindrique ouvert d'un côté, dont la hauteur correspond à peu près à celle du filtre principal (10) et qui comporte au moins une buse plate (13, 14) dirigée vers la surface intérieure (20) du filtre principal (10) ; et

b) dans le mode de rétro-rinçage, il est prévu dans le trajet d'écoulement entre la seconde soupape d'arrêt (24) et un orifice d'entrée (18) du dispositif de pulvérisation ou projection (11) une troisième soupape d'arrêt (25) qui comporte un organe obturateur placé dans un appendice tubulaire (27) du filtre principal (10), l'organe obturateur coopérant avec des évidements (45, 50) répartis à la périphérie de l'appendice tubulaire (27), et obturent en mode de rétro-rinçage, la liaison hydraulique directe entre, d'une part, le volume intérieur défini par le dispositif de pulvérisation ou de projection (11) et le filtre principal (10) et, d'autre part, le volume d'écoulement existant entre la seconde soupape d'arrêt (24) et l'orifice d'entrée (18) du dispositif de pulvérisation ou de projection.

2. Dispositif de filtrage selon la revendication 1, caractérisé en ce que l'organe obturateur de la troisième soupape d'arrêt (25) se compose d'un fourreau (47) pouvant coulisser dans l'appendice tubulaire (27) du filtre principal (10).

3. Dispositif de filtrage selon la revendication 2, caractérisé en ce que le fourreau (47) comporte une collerette (48) faisant saillie vers l'extérieur.

4. Dispositif de filtrage selon la revendication 3, caractérisé en ce que la collerette (48) est agencée comme un organe de butée pour la position d'ouverture de la troisième soupape d'arrêt (25).

5. Dispositif de filtrage selon la revendication 1, caractérisé en ce que l'organe obturateur de la troisième soupape d'arrêt (25) se compose d'un fourreau élastique (49) en forme d'entonnoir avec une bague d'arrêt (52) disposée à sa partie de plus petit diamètre, fourreau disposé à l'intérieur d'une gaine de soupape (51) également en forme d'entonnoir et comportant au moins un évidement (50), la gaine de soupape (51) reliant l'une des extrémités de l'appendice tubulaire (27) avec l'orifice d'entrée (18) du dispositif de pulvérisation et de projection (11).

6. Dispositif de filtrage selon l'une ou plusieurs des revendications 2 à 5, caractérisé en ce que l'appendice tubulaire (27) du filtre principal (10) constitue simultanément l'organe obturateur de la seconde soupape d'arrêt (24) et peut coulisser de façon étanche dans un appendice intérieur (28) du carter, de forme tubulaire, pourvu d'au moins un évidement (29) et qui est relié hydrauliquement avec la tubulure de sortie (3).

7. Dispositif de filtrage selon la revendication 6, caractérisé en ce que l'appendice de carter (28) est entouré concentriquement par un préfiltre (54).

8. Dispositif de filtrage selon l'une ou plusieurs des revendications 2 à 7, caractérisé en ce qu'un collet extérieur (31) de l'appendice tubulaire (27) constitue l'organe obturateur (33) de la première soupape d'arrêt (23) qui coopère avec une bague d'appui de soupape (26) solidaire du carter.

0 018 527

FIG.1

0 018 527

FIG.2

FIG.3

FIG.4